# EUROPEAN PATENT SPECIFICATION

(11) **EP 3 838 529 B1**
(45) Date of publication and mention of the grant of the patent: **24.05.2023**
(21) Application number: 20165119.7
(22) Date of filing: 24.03.2020
(51) Int. Cl.: B27N 7/00, B27N 3/00, B27N 1/00, B32B 21/02, B32B 21/13, B32B 21/14, E04C 2/16, B27N 3/06

(54) **WOOD COMPOSITE BOARD AND PREPARATION METHOD THEREOF**
HOLZVERBUNDPLATTE UND VERFAHREN ZU IHRER HERSTELLUNG
PANNEAU COMPOSITE EN BOIS ET SON PROCÉDÉ DE PRÉPARATION

(30) Priority: 18.12.2019 CN 201911312125; 19.12.2019 CN 201911315066
(43) Date of publication of application: 23.06.2021
(73) Proprietor: Nanning Ketian New Material Technology Co., Ltd, Nanning, Guangxi (CN)
(72) Inventor: Dai, Jiabing, Nanning, Guangxi (CN); Zeng, Ling, Nanning, Guangxi (CN); Li, Weihu, Nanning, Guangxi (CN); Yang, Huayong, Nanning, Guangxi (CN)
(74) Representative: Cabinet Chaillot

(56) References cited:
- EP-A1- 2 697 060
- EP-A1- 3 072 653
- US-B1- 6 299 936

## Description

### Background of the Invention

### 1. Field of the Invention

The invention relates to the technical field of manufacturing composite boards, in particular to a wood composite board and a preparation method thereof.

### 2. Background Art

Wood finish materials have low moisture content, easy processing, and the most widely use, at present, in domestic and foreign markets, the finish materials mainly used in the production of block board are: 1) solid wood board with a thickness of 0.10-0.75mm, wood species including poplar, mahogany, mangosteen, etc .; 2) integrated materials with a thickness of 0.2-0.6mm, such as engineered wood; 3) high density fiberboard with a thickness of 1-3mm;

The above-mentioned wood finish material pressing process refers to that: the lower surface of plywood or block board is pressed to form into base materials of ecological board or finish products through procedures such as coating, cold-pressing, hot-pressing etc., the finished products of ecological boards are made by pressing and sticking impregnated paper on the base materials of ecological board;

the finished products of ecological boards made by the finish material pressing process: using the base materials of ecological board or finish products pressed from two kinds of finish materials in above mentioned 1) and 2) and pressing and sticking impregnated paper on the upper and lower surfaces of the base materials of ecological board, has the defects of poor surface evenness, low surface bonding strength, high moisture content, poor dimensional stability, and poor anti-cracking and anti-thermocycling performance; the finished products of ecological boards made by the finish material pressing process: using the base materials of ecological board or finish products pressed from two kinds of finish materials in above mentioned 3) and pressing and sticking impregnated paper on the upper and lower surfaces of the base materials of ecological board, has the problems of formaldehyde pollution, low surface bonding strength, large thickness swelling rate of water absorption, large thickness, and high production costs.

The document EP2697060 A1 discloses a preparation method of a wood composite board.

### Summary of the Invention

In order to solve above technical problems, the invention provides the following technical schemes: A wood composite board and preparation method thereof, comprising following steps:
step 1, selecting wood materials and adhesives, wherein the moisture content of the wood materials is 0%-9%, and the adhesive is polyurethane adhesive, formaldehyde-free biomass adhesive or formaldehyde-type adhesives; applying the adhesives into the wood materials and stirring, adhesive consumption is 7%-35% of the weight of the wood materials, applying waterproof agent and mildew preventive into the wood materials, and thereafter drying the wood materials to a moisture content of 3%-15%;
step 2, selecting board, evenly coating the adhesives on the upper and lower surfaces of the board, and coating amount of each surface is 100g/m²-120g/m², evenly paving the wood materials prepared in step 1 on the upper and lower surfaces of the board, paving amount thereof is 0.5kg/m²-3.9kg/m² and paving depth is 1mm-3mm;
step 3, after the paving in step 2, the wood composite board is made through high-temperature and hot-pressing, hot-pressing temperature is 100°C-150°C, hot-pressing pressure and time are divided into three stages: in the first stage, the pressure is 0.7MPa-0.9MPa for the time of 3-10min, in the second stage, the pressure is 0.3MPa-0.5MPa for the time of 1-10min, in the third stage, the pressure is 0.0MPa-0.3MPa for the time of 1-10min;
step 4, after the hot-pressing in step 3, air cooling the wood composite board for more than 5min, and then collecting and stacking thereof; reconditioning the wood composite board naturally for more than 7 days, and trimming and sanding to determine the thickness, the thickness error of the board is controlled in ±0.1mm.

Preferably, the wood materials is wood fiber, the fineness degree thereof is 0.2-0.6mm, the moisture content of the selected wood fiber is 0%-9%; when the wood materials is wood fiber, the added amount of waterproof agent is 0.3% -0.6% of the weight of the wood materials, the added amount of mildew preventive is 0.1%-0.4% of the weight of the wood materials, and after applying, drying the wood materials to a moisture content of 3%-15%.

Preferably, when the wood materials is wood fiber, the paving amount thereof on the board is 0.7kg/m²-3.9kg/m².

Preferably, the wood materials is wood particle, screen mesh size thereof is less than or equal to 1.53*1.53mm and greater than or equal to 0.11* 0.11mm, the moisture content of the selected wood particle is 0%-3%; when the wood materials is wood particle, the added amount of waterproof agent is 0.05%-3.4% of the weight of the wood materials, the added amount of mildew preventive is 0.01%-4.5% of the weight of the wood materials, and after applying, drying the wood materials to a moisture content of 5%-12%.

Preferably, when the wood materials is wood particle, the paving amount thereof on the board is 0.5kg/m²-3.5kg/m².

Preferably, the selected board in step 2 has a thickness of 5-21mm, a length of 2450-2750mm, and a width of 1230-1310mm.

Preferably, the selected board in step 2 is plywood, block board, oriented particle board, straw board or any combination of artificial boards.

By adapting above methods, the invention has following advantages: 1. the wood artificial composite board of the invention has good evenness, high surface bonding strength, low moisture content, good dimensional stability, anti-cracking and anti-thermocycling performance.

2. The wood material of the invention uses compound adhesives such as polyurethane adhesive, formaldehyde-free biomass adhesive or formaldehyde-type adhesives (urea-formaldehyde, phenol-formaldehyde, and melamine-formaldehyde), waterproofing agent, mildew preventive, etc., and has a low thickness swelling rate of water absorption, the thickness can be less than 1mm, and the production cost is low.

3. Plywood, block board, oriented particle board, straw board or any combination of artificial boards are formed by paving glue blending wood materials and through hot-pressing, the surfaces of the artificial boards can be glue-free, which saves production costs.

4. The wood materials can be made from waste materials such as branches wood and small logs, recycling waste materials, and solving the problem of lack of wood raw materials.

5. The wood materials has a certain thickness, when the thickness of finished products remains unchanged, the thickness of plywood, block board, oriented particle board, straw board or any combination of artificial boards used for direct sticking is reduced, which saves production costs.

### Detailed Description of the Preferred Embodiments

### Preparing wood fiber composite board

### Embodiment 1

A preparation method of a wood composite board, comprising following steps:
step 1, selecting wood fiber and adhesives, wherein the fineness degree thereof is 0.2mm, the moisture content thereof is 3%, the adhesive is polyurethane adhesive, formaldehyde-free biomass adhesive or formaldehyde-type adhesives; applying the adhesives into the wood fiber and stirring, adhesive consumption is 7% of the weight of the wood fiber, applying waterproof agent into the wood fiber, additive amount thereof is 0.3% of the weight of the wood fiber, and applying mildew preventive, additive amount thereof is 0.1% of the weight of the wood fiber, and thereafter drying the wood fiber to a moisture content of 3%;
step 2, selecting board, the board is plywood, block board, oriented particle board, straw board or any combination of artificial boards, and the selected board has a thickness of 5mm, a length of 2450mm, and a width of 1230mm, evenly coating the adhesives on the upper and lower surfaces of the board, and coating amount of each surface is 100g/m², evenly paving the wood fiber prepared in step 1 on the upper and lower surfaces of the board, paving amount thereof is 0.7kg/m² and paving depth is 1mm;
step 3, after the paving in step 2, the wood fiber composite board is made through high-temperature and hot-pressing, hot-pressing temperature is 100°C, hot-pressing pressure and time are divided into three stages: in the first stage, the pressure is 0.7MPa for the time of 3min, in the second stage, the pressure is 0.3MPa for the time of 1min, in the third stage, the pressure is 0.0MPa for the time of 1min;
step 4, after the hot-pressing in step 3, air cooling the wood fiber composite board for more than 5min, and then collecting and stacking thereof; reconditioning the wood fiber composite board naturally for more than 7 days, and trimming and sanding to determine the thickness, the thickness error of the board is controlled in ± 0.1mm.

### Embodiment 2

A preparation method of a wood composite board, comprising following steps:
step 1, selecting wood fiber and adhesives, wherein the fineness degree thereof is 0.6mm, the moisture content thereof is 9%, the adhesive is polyurethane adhesive, formaldehyde-free biomass adhesive or formaldehyde-type adhesives; applying the adhesives into the wood fiber and stirring, adhesive consumption is 35% of the weight of the wood fiber, applying waterproof agent into the wood fiber, additive amount thereof is 0.6% of the weight of the wood fiber, and applying mildew preventive, additive amount thereof is 0.4% of the weight of the wood fiber, and thereafter drying the wood fiber to a moisture content of 15%;
step 2, selecting board, the board is plywood, block board, oriented particle board, straw board or any combination of artificial boards, and the selected board has a thickness of 21mm, a length of 2750mm, and a width of 1310mm, evenly coating the adhesives on the upper and lower surfaces of the board, and coating amount of each surface is 120g/m², evenly paving the wood fiber prepared in step 1 on the upper and lower surfaces of the board, paving amount thereof is 3.9kg/m² and paving depth is 3mm;
step 3, after the paving in step 2, the wood fiber composite board is made through high-temperature and hot-pressing, hot-pressing temperature is 150°C, hot-pressing pressure and time are divided into three stages: in the first stage, the pressure is 0.9MPa for the time of 10min, in the second stage, the pressure is 0.5MPa for the time of 10min, in the third stage, the pressure is 0.3MPa for the time of 10min;
step 4, after the hot-pressing in step 3, air cooling the wood fiber composite board for more than 5min, and then collecting and stacking thereof; reconditioning the wood fiber composite board naturally for more than 7 days, and trimming and sanding to determine the thickness, the thickness error of the board is controlled in ±0.1mm.

### Embodiment 3

A preparation method of a wood composite board, comprising following steps:
step 1, selecting wood fiber and adhesives, wherein the fineness degree thereof is 0.4mm, the moisture content thereof is 5%, the adhesive is polyurethane adhesive, formaldehyde-free biomass adhesive or formaldehyde-type adhesives; applying the adhesives into the wood fiber and stirring, adhesive consumption is 20% of the weight of the wood fiber, applying waterproof agent into the wood fiber, additive amount thereof is 0.5% of the weight of the wood fiber, and applying mildew preventive, additive amount thereof is 0.3% of the weight of the wood fiber, and thereafter drying the wood fiber to a moisture content of 9%;
step 2, selecting board, the board is plywood, block board, oriented particle board, straw board or any combination of artificial boards, and the selected board has a thickness of 13mm, a length of 2650mm, and a width of 1280mm, evenly coating the adhesives on the upper and lower surfaces of the board, and coating amount of each surface is 110g/m², evenly paving the wood fiber prepared in step 1 on the upper and lower surfaces of the board, paving amount thereof is 2kg/m² and paving depth is 2mm;
step 3, after the paving in step 2, the wood fiber composite board is made through high-temperature and hot-pressing, hot-pressing temperature is 130°C, hot-pressing pressure and time are divided into three stages: in the first stage, the pressure is 0.8MPa for the time of 6min, in the second stage, the pressure is 0.4MPa for the time of 6min, in the third stage, the pressure is 0.2MPa for the time of 6min;
step 4, after the hot-pressing in step 3, air cooling the wood fiber composite board for more than 5min, and then collecting and stacking thereof; reconditioning the wood fiber composite board naturally for more than 7 days, and trimming and sanding to determine the thickness, the thickness error of the board is controlled in ± 0.1mm.

**Table 1 Test Results of Wood Fiber Composite Board in the Invention**

| Test Items | Unit | Standard Requirement | Test Results | | | Inspection Standards | Others |
|---|---|---|---|---|---|---|---|
| | | | Embodime nt 1 | Embodime nt 2 | Embodime nt 3 | | |
| Surface Bonding Strength | MPa | ≥1.0 | 1.2 | 1.3 | 1.4 | GB/T17657-2 0 13 Test Methods of Evaluating the Properties of Wood-based Panels and Surface Decorated wood-based panels | Between the fiber layer and the wood-based panel layer |
| Thickness Swelling Rate of Water Absorption in 24h | % | ≤15 | 10 | 10 | 11 | | - |
| Formaldehyde Emission | mg/L | <0.10 | 0.09 | 0.07 | 0.05 | | - |
| Surface Anti-thermocyc ling Performance | degree | ≤5 | 4 | 5 | 5 | | |
| Surface Anti-cracking Performance | degree | ≤5 | 3 | 4 | 5 | | |

### Preparing wood particle composite board

### Embodiment 4

A preparation method of a wood composite board, comprising following steps:
step 1, selecting wood particle and adhesives, wherein the screen mesh size thereof is less than or equal to 1.53^{∗}1.53mm and greater than or equal to 0.11*0.11mm, the moisture content thereof is 1%, the adhesive is polyurethane adhesive, formaldehyde-free biomass adhesive or formaldehyde-type adhesives; applying the adhesives into the wood materials and stirring, adhesive consumption is 7% of the weight of the wood materials, applying waterproof agent into the wood materials, additive amount thereof is 0.05% of the weight of the wood materials, and applying mildew preventive, additive amount thereof is 0.01% of the weight of the wood materials, and thereafter drying the wood materials to a moisture content of 3%;
step 2, selecting board, the board is plywood, block board, oriented particle board, straw board or any combination of artificial boards, and the selected board has a thickness of 5mm, a length of 2450mm, and a width of 1230mm, evenly coating the adhesives on the upper and lower surfaces of the board, and coating amount of each surface is 100g/m², evenly paving the wood fiber prepared in step 1 on the upper and lower surfaces of the board, paving amount thereof is 0.5kg/m² and paving depth is 1mm;
step 3, after the paving in step 2, the wood composite board is made through high-temperature and hot-pressing, hot-pressing temperature is 100°C, hot-pressing pressure and time are divided into three stages: in the first stage, the pressure is 0.7MPa for the time of 3min, in the second stage, the pressure is 0.3MPa for the time of 1min, in the third stage, the pressure is 0.0MPa for the time of 1min;
step 4, after the hot-pressing in step 3, air cooling the wood composite board for more than 5min, and then collecting and stacking thereof; reconditioning the wood composite board naturally for more than 7 days, and trimming and sanding to determine the thickness, the thickness error of the board is controlled in ±0.1mm.

### Embodiment 5

A preparation method of a wood composite board, comprising following steps:
step 1, selecting wood particle and adhesives, wherein the screen mesh size thereof is less than or equal to 1.53^{∗}1.53mm and greater than or equal to 0.11^{∗}0.11mm, the moisture content thereof is 3%, the adhesive is polyurethane adhesive, formaldehyde-free biomass adhesive or formaldehyde-type adhesives; applying the adhesives into the wood materials and stirring, adhesive consumption is 35% of the weight of the wood materials, applying waterproof agent into the wood materials, additive amount thereof is 3.4% of the weight of the wood materials, and applying mildew preventive, additive amount thereof is 4.5% of the weight of the wood materials, and thereafter drying the wood materials to a moisture content of 15%;
step 2, selecting board, the board is plywood, block board, oriented particle board, straw board or any combination of artificial boards, and the selected board has a thickness of 21mm, a length of 2750mm, and a width of 1310mm, evenly coating the adhesives on the upper and lower surfaces of the board, and coating amount of each surface is 120g/m², evenly paving the wood fiber prepared in step 1 on the upper and lower surfaces of the board, paving amount thereof is 3.5kg/m² and paving depth is 3mm;
step 3, after the paving in step 2, the wood composite board is made through high-temperature and hot-pressing, hot-pressing temperature is 150°C, hot-pressing pressure and time are divided into three stages: in the first stage, the pressure is 0.9MPa for the time of 10min, in the second stage, the pressure is 0.5MPa for the time of 10min, in the third stage, the pressure is 0.3MPa for the time of 10min;
step 4, after the hot-pressing in step 3, air cooling the wood composite board for more than 5min, and then collecting and stacking thereof; reconditioning the wood composite board naturally for more than 7 days, and trimming and sanding to determine the thickness, the thickness error of the board is controlled in ±0.1mm.

### Embodiment 6

A preparation method of a wood composite board, comprising following steps:
step 1, selecting wood particle and adhesives, wherein the screen mesh size thereof is less than or equal to 1.53^{∗}1.53mm and greater than or equal to 0.11^{∗}0.11mm, the moisture content thereof is 2%, the adhesive is polyurethane adhesive, formaldehyde-free biomass adhesive or formaldehyde-type adhesives; applying the adhesives into the wood materials and stirring, adhesive consumption is 20% of the weight of the wood materials, applying waterproof agent into the wood materials, additive amount thereof is 1.7% of the weight of the wood materials, and applying mildew preventive, additive amount thereof is 2.3% of the weight of the wood materials, and thereafter drying the wood materials to a moisture content of 9%;
step 2, selecting board, the board is plywood, block board, oriented particle board, straw board or any combination of artificial boards, and the selected board has a thickness of 13mm, a length of 2550mm, and a width of 1280mm, evenly coating the adhesives on the upper and lower surfaces of the board, and coating amount of each surface is 110g/m², evenly paving the wood fiber prepared in step 1 on the upper and lower surfaces of the board, paving amount thereof is 2kg/m² and paving depth is 2mm;
step 3, after the paving in step 2, the wood composite board is made through high-temperature and hot-pressing, hot-pressing temperature is 120°C, hot-pressing pressure and time are divided into three stages: in the first stage, the pressure is 0.8MPa for the time of 6min, in the second stage, the pressure is 0.4MPa for the time of 6min, in the third stage, the pressure is 0.2MPa for the time of 6min;
step 4, after the hot-pressing in step 3, air cooling the wood composite board for more than 5min, and then collecting and stacking thereof; reconditioning the wood composite board naturally for more than 7 days, and trimming and sanding to determine the thickness, the thickness error of the board is controlled in ±0.1mm.

**Table 2 Test Results of Wood Particle Composite Board in the Invention**

| Test Items | Unit | Standard Requirement | Test Results | | | Inspection Standards | Others |
|---|---|---|---|---|---|---|---|
| | | | Embodiment 4 | Embodiment 5 | Embodiment 6 | | |
| Surface Bonding Strength | MPa | ≥1.0 | 1.2 | 1.3 | 1.4 | GB/T17657-2013 Test Methods of Evaluating the Properties of Wood-based Panels and Surface Decorated wood-based panels | Between the particle layer and the wood-based panel layer |
| Thickness Swelling Rate of Water Absorption in 24h | % | ≤15 | 13 | 12 | 11 | | - |
| Formaldehyde Emission | mg/L | <0.10 | 0.09 | 0.08 | 0.08 | | - |
| Surface Anti-thermocycling Performance | stage | ≤5 | 4 | 4 | 5 | | |
| Surface Anti-cracking Performance | stage | ≤5 | 5 | 4 | 5 | | |

The invention and embodiments thereof have been described above, and the description is not restrictive, in conclusion, the similar structures and embodiments with the technical scheme of the invention, which are designed by those skilled in the art inspired by the invention, without creativity and without departing from the scope of the invention, should be included in the protection scope of the appended claims.

## Claims

1. A preparation method of a wood composite board, comprising following steps:
step 1, selecting wood materials and adhesives, wherein the moisture content of the wood materials is 0% -9%, and the adhesive is polyurethane adhesive, formaldehyde-free biomass adhesive or formaldehyde-type adhesives; applying the adhesives into the wood materials and stirring, adhesive consumption is 7%-35% of the weight of the wood materials, applying waterproof agent and mildew preventive into the wood materials, and thereafter drying the wood materials to a moisture content of 3%-15%;
step 2, selecting board, evenly coating the adhesives on the upper and lower surfaces of the board, and coating amount of each surface is 100g/m²-120g/m², evenly paving the wood materials prepared in step 1 on the upper and lower surfaces of the board, paving amount thereof is 0.5kg/m²-3.9kg/m² and paving depth is 1mm-3mm;
step 3, after the paving in step 2, the wood composite board is made through high-temperature and hot-pressing, hot-pressing temperature is 100°C-150°C, hot-pressing pressure and time are divided into three stages: in the first stage, the pressure is 0.7MPa-0.9MPa for the time of 3-10min, in the second stage, the pressure is 0.3MPa-0.5MPa for the time of 1-10min, in the third stage, the pressure is 0.0MPa-0.3MPa for the time of 1-10min;
step 4, after the hot-pressing in step 3, air cooling the wood composite board for more than 5min, and then collecting and stacking thereof; reconditioning the wood composite board naturally for more than 7 days, and trimming and sanding to determine the thickness, the thickness error of the board is controlled in ±0.1mm.

2. The preparation method of a wood composite board of claim 1, wherein the wood materials is wood fiber, the fineness degree thereof 0.2-0.6mm, the moisture content of the selected wood fiber is 0%-9%; when the wood materials is wood fiber, the added amount of waterproof agent is 0.3% -0.6% of the weight of the wood materials, the added amount of mildew preventive is 0.1%-0.4% of the weight of the wood materials, and after applying, drying the wood materials to a moisture content of 3%-15%.

3. The preparation method of a wood composite board of claim 1, wherein when the wood materials is wood fiber, the paving amount thereof on the board is 0.7kg/m²-3.9kg/m².

4. The preparation method of a wood composite board of claim 1, wherein the wood materials is wood particle, screen mesh size thereof is less than or equal to 1.53^{∗}1.53mm and greater than or equal to 0.11^{∗}0.11mm, the moisture content of the selected wood particle is 0%-3%; when the wood materials is wood particle, the added amount of waterproof agent is 0.05%-3.4% of the weight of the wood materials, the added amount of mildew preventive is 0.01%-4.5% of the weight of the wood materials, and after applying, drying the wood materials to a moisture content of 5%-12%.

5. The preparation method of a wood composite board of claim 1, wherein when the wood materials is wood particle, the paving amount thereof on the board is 0.5kg/m²-3.5kg/m².

6. The preparation method of a wood composite board of claim 1, wherein the selected board in step 2 has a thickness of 5-21mm, a length of 2450-2750mm, and a width of 1230-1310mm.

7. The preparation method of a wood composite board of claim 1, wherein the selected board in step 2 is plywood, block board, oriented particle board, straw board or any combination of artificial boards.

## Patentansprüche

1. - Verfahren zur Herstellung einer Holzverbundplatte, umfassend die folgenden Schritte:
Schritt 1, Auswählen von Holzmaterialien und Klebstoffen, wobei der Feuchtigkeitsgehalt des Holzmaterialien 0 % - 9 % beträgt und der Klebstoff Polyurethanklebstoff, Formaldehyd-freier Biomassenklebstoff oder Formaldehyd-artige Klebstoffe ist/sind; Aufbringen der Klebstoffe in die Holzmaterialien und Rühren, der Klebstoffverbrauch beträgt 7 % - 35 % des Gewichts der Holzmaterialien, Aufbringen eines Hydrophobierungsmittels und Mehltau-Vorbeugungsmittels in die Holzmaterialien, und danach Trocknen der Holzmaterialien auf einen Feuchtigkeitsgehalt von 3 % - 15 %;
Schritt 2, Auswählen einer Platte, gleichmäßiges Beschichten der Klebstoffe auf die obere und untere Fläche der Platte, und wobei die Beschichtungsmenge jeder Fläche 100 g/m² - 120 g/m² beträgt, gleichmäßiges Verteilen der Holzmaterialien, hergestellt in Schritt 1, auf der oberen und unteren Fläche der Platte, wobei die Verteilungsmenge davon 0,5 kg/m² - 3,9 kg/m² und die Verteilungstiefe 1 mm - 3 mm beträgt;
Schritt 3, nach der Verteilung in Schritt 2, die Holzverbundplatte wird durch Hochtemperatur und Heißpressen hergestellt, wobei die Heißpresstemperatur 100 °C - 150 °C beträgt, der Heißpressdruck und die Zeit in drei Stufen unterteilt werden: in der ersten Stufe beträgt der Druck 0,7 MPa - 0,9 MPa für die Zeit von 3 - 10 min, in der zweiten Stufe beträgt der Druck 0,3 MPa - 0,5 MPa für die Zeit von 1 - 10 min, in der dritten Stufe beträgt der Druck 0,0 MPa - 0,3 MPa für die Zeit von 1 - 10 min;
Schritt 4, nach dem Heißpressen in Schritt 3, Luftkühlen der Holzverbundplatte für mehr als 5 min und dann Sammeln und Stapeln davon; natürliches Aufarbeiten der Holzverbundplatte für mehr als 7 Tage und Trimmen und Schleifen, um die Dicke zu bestimmen, die Dickenabweichung der Platte wird innerhalb von ± 0,1 mm kontrolliert.

2. - Verfahren zur Herstellung einer Holzverbundplatte nach Anspruch 1, wobei die Holzmaterialien Holzfasern sind, der Feinheitsgrad davon 0,2 - 0,6 mm beträgt, der Feuchtigkeitsgehalt der ausgewählten Holzfaser 0 % bis 9 % beträgt; wenn die Holzmaterialien Holzfasern sind, beträgt die zugegebene Menge von Hydrophobierungsmittels 0,3 % - 0,6 % des Gewichts der Holzmaterialien, die zugegebene Menge von Mehltau-Vorbeugungsmittel beträgt 0,1 % - 0,4 % des Gewichts der Holzmaterialien, und nach dem Auftragen, Trocknen der Holzmaterialien auf einen Feuchtigkeitsgehalt von 3 % - 15 %.

3. - Verfahren zur Herstellung einer Holzverbundplatte nach Anspruch 1, wobei wenn die Holzmaterialien Holzfasern sind, die Verteilungsmenge davon auf der Platte 0,7 kg/m^{2 -} 3,9 kg/m² beträgt.

4. - Verfahren zur Herstellung einer Holzverbundplatte nach Anspruch 1, wobei die Holzmaterialien Holzpartikel sind, die Siebmaschengröße davon weniger als oder gleich 1,53*1,53 mm und grösser als oder gleich 0,11*0,11 mm ist, der Feuchtigkeitsgehalt der ausgewählten Holzpartikel 0 % - 3 % beträgt; wenn die Holzmaterialien Holzpartikel sind, beträgt die zugegebene Menge von Hydrophobierungsmittel 0,05 % - 3,4 % des Gewichts der Holzmaterialien, die zugegebene Menge von Mehltau-Vorbeugungsmittel beträgt 0,01 % - 4,5 % des Gewichts der Holzmaterialien, und nach dem Auftragen, Trocknen der Holzmaterialien auf einen Feuchtigkeitsgehalt von 5 % - 12 %.

5. - Verfahren zur Herstellung einer Holzverbundplatte nach Anspruch 1, wobei, wenn die Holzmaterialien Holzpartikel sind, die Verteilungsmenge davon auf der Platte 0,5 kg/m² - 3,5 kg/m² beträgt.

6. - Verfahren zur Herstellung einer Holzverbundplatte nach Anspruch 1, wobei die ausgewählte Platte in Schritt 2 eine Dicke von 5 - 21 mm, eine Länge von 2450 - 2750 mm und eine Breite von 1230 - 1310 mm aufweist.

7. - Verfahren zur Herstellung einer Holzverbundplatte nach Anspruch 1, wobei die ausgewählte Platte in Schritt 2 Sperrholz, Stabplatte, Richtungsspanplatte, Strohpappe oder jede Kombination künstlicher Platten ist.

## Revendications

1. - Procédé de fabrication d'un panneau composite à base de bois, comprenant les étapes suivantes :
étape 1, choisir des matières à base de bois et des adhésifs, la teneur en humidité des matières à base de bois étant de 0 % - 9 %, et l'adhésif étant un adhésif à base de polyuréthane, un adhésif à base de biomasse exempte de formaldéhyde ou des adhésifs de type formaldéhyde ; appliquer les adhésifs dans les matières à base de bois et agiter, la consommation d'adhésif étant de 7 % à 35 % du poids des matières à base de bois, appliquer un agent imperméabilisant et un agent anti-moisissure dans les matières à base de bois, puis sécher les matières à base de bois jusqu'à une teneur en humidité de 3 % à 15 % ;
étape 2, choisir un panneau, appliquer uniformément en revêtement les adhésifs sur les surfaces supérieure et inférieure du panneau, la quantité de revêtement de chaque surface étant de 100g/m² à 120g/m², répartir uniformément les matières à base de bois préparées à l'étape 1 sur les surfaces supérieure et inférieure du panneau, la quantité de répartition étant de 0,5kg/m² à 3,9kg/m² et la profondeur de répartition étant de 1 mm à 3 mm ;
étape 3, après la répartition de l'étape 2, le panneau composite à base de bois est fabriqué à haute température et par pressage à chaud, la température de pressage à chaud étant de 100 °C à 150 °C, la pression et le temps de pressage à chaud étant divisés en trois étapes : dans la première étape, la pression est de 0,7 MPa à 0,9 MPa pendant le laps de temps de 3 à 10 min, dans la deuxième étape, la pression est 0,3 MPa à 0,5 MPa pendant le laps de temps de 1 à 10 min, dans la troisième étape, la pression est 0,0 MPa à 0,3 MPa pendant le laps de temps de 1 à 10 min ;
étape 4, après le pressage à chaud de l'étape 3, refroidir à l'air le panneau composite à base de bois pendant plus de 5 minutes, puis collecter et empiler celui-ci ; reconditionner le panneau composite à base de bois naturellement pendant plus de 7 jours, et couper et poncer pour déterminer l'épaisseur, l'erreur d'épaisseur du panneau étant contrôlée dans les ± 0,1 mm.

2. - Procédé de fabrication d'un panneau composite à base de bois selon la revendication 1, dans lequel les matières à base de bois sont de la fibre de bois, leur degré de finesse est de 0,2 à 0,6 mm, la teneur en humidité de la fibre de bois choisie est de 0 à 9 % ; lorsque les matières à base de bois sont de la fibre de bois, la quantité ajoutée d'agent imperméabilisant est de 0,3 à 0,6 % du poids des matières à base de bois, la quantité ajoutée d'agent anti-moisissure est de 0,1 à 0,4 % du poids des matières à base de bois et, après application, sécher les matières à base de bois jusqu'à une teneur en humidité de 3 à 15 %.

3. - Procédé de fabrication d'un panneau composite à base de bois selon la revendication 1, dans lequel, lorsque les matières à base de bois sont de la fibre de bois, la quantité de répartition de celles-ci sur le panneau est de 0,7 kg/m² à 3,9 kg/m².

4. - Procédé de fabrication d'un panneau composite à base de bois selon la revendication 1, dans lequel les matières à base de bois sont des particules de bois, la grandeur de maille de tamisage de celles-ci est inférieure ou égale à 1,53*1,53 mm et supérieure ou égale à 0,11*0,11 mm, la teneur en humidité des particules de bois choisies est de 0 % à 3 % ; lorsque les matières à base de bois sont des particules de bois, la quantité ajoutée d'agent imperméabilisant est de 0,05 % à 3,4 % du poids des matières à base de bois, la quantité ajoutée d'agent anti-moisissure est de 0,01 % à 4,5 % du poids des matières à base de bois et, après application, sécher les matières à base de bois à une teneur en humidité de 5 % à 12 %.

5. - Procédé de fabrication d'un panneau composite à base de bois selon la revendication 1, dans lequel, lorsque les matières à base de bois sont des particules de bois, la quantité de répartition de celles-ci sur le panneau est de 0,5 kg/m² à 3,5 kg/m².

6. - Procédé de fabrication d'un panneau composite à base de bois selon la revendication 1, dans lequel le panneau choisi à l'étape 2 a une épaisseur de 5 à 21 mm, une longueur de 2450 à 2750 mm et une largeur de 1230 à 1310 mm.

7. - Procédé de fabrication d'un panneau composite à base de bois selon la revendication 1, dans lequel le panneau choisi à l'étape 2 est un contreplaqué, un panneau bloc, un panneau de particules orientées, un panneau de paille ou toute combinaison de panneaux artificiels.
